# EUROPEAN PATENT APPLICATION

(11) **EP 4 571 875 A1**
(43) Date of publication of application: **18.06.2025**
(21) Application number: 24210092.3
(22) Date of filing: 31.10.2024
(51) Int. Cl.: H01M 4/133, H01M 4/134, H01M 4/1393, H01M 4/1395, H01M 4/36, H01M 4/62, H01M 10/0525, H01M 4/02

(54) **NEGATIVE ELECTRODE FOR RECHARGEABLE LITHIUM BATTERY, AND RECHARGEABLE LITHIUM BATTERY INCLUDING THE SAME**

(30) Priority: 14.12.2023 KR 20230182266
(71) Applicant: SAMSUNG SDI CO., LTD., Yongin-si, Gyeonggi-do 17084 (KR)
(72) Inventor: KIM, Minjun, 17084 Yongin-si (KR); AN, Hoyong, 17084 Yongin-si (KR); KIM, Beom Kwon, 17084 Yongin-si (KR); JO, Gurnyoung, 17084 Yongin-si (KR); KIM, Soochan, 17084 Yongin-si (KR); JUNG, Hyeseung, 17084 Yongin-si (KR); HONG, Minyoung, 17084 Yongin-si (KR)
(74) Representative: Marks & Clerk LLP

(57) **Abstract**

Example embodiments include a negative electrode for a rechargeable lithium battery, a method of preparing the negative electrode, and a rechargeable lithium battery including the negative electrode. The negative electrode for the rechargeable lithium battery includes a current collector and a negative electrode active material layer on the current collector, wherein the negative electrode active material layer includes a first region in contact with the current collector and a second region on the first region. The first region includes a negative electrode active material, and the second region includes an expandable binder and a negative electrode active material.

## Description

### BACKGROUND

### (a) Field

Example embodiments relate to a negative electrode for a rechargeable lithium battery, and a rechargeable lithium battery including the same.

### (b) Description of the Related Art

With the rapid spread of electronic devices that use batteries, such as, e.g., mobile phones, laptop computers, electric vehicles, and the like, demand for high-energy density and high-capacity rechargeable lithium batteries is increasing. Research to improve performances of rechargeable lithium batteries is active.

Rechargeable lithium batteries typically include a positive electrode and a negative electrode including an active material capable of intercalating and deintercalating lithium ions, and an electrolyte solution. Electrical energy is produced by oxidation and reduction reactions when lithium ions are intercalated/deintercalated at the positive and negative electrodes.

### SUMMARY

One or more example embodiments include a negative electrode for a rechargeable lithium battery exhibiting improved fast-charge characteristics and cycle-life characteristics.

Another example embodiment includes a method of preparing a negative electrode for a rechargeable lithium battery.

Still another example embodiment includes a rechargeable lithium battery including the negative electrode.

One or more example embodiments include a negative electrode for a rechargeable lithium battery including a current collector, and a negative electrode active material layer on the current collector. The negative electrode active material layer includes a first region in contact with the current collector and a second region on the first region. The first region includes a negative electrode active material, and the second region includes a negative electrode active material and an expandable binder.

Another example embodiment includes a method of preparing a negative electrode for a rechargeable lithium battery, the method including coating a negative electrode active material layer composition including a negative electrode active material on current collector, and drying to prepare a negative electrode coating layer, coating an expandable binder liquid including an expandable binder and a solvent on the negative electrode coating layer to impregnate the binder into the negative electrode coating layer, and drying the resulting product.

Still another example embodiment includes a rechargeable lithium battery including the negative electrode, a positive electrode, and an electrolyte.

At least some of the above and other features of the invention are set out in the claims.

A negative electrode for a rechargeable lithium battery according to one or more example embodiments may exhibit desired, improved or advantageous fast charge characteristic and cycle-life characteristic.

### BRIEF DESCRIPTION OF THE DRAWINGS

FIG. 1 is a schematic view illustrating a negative electrode for a rechargeable lithium battery, according to example embodiments.
FIG. 2 to FIG. 5 are schematic views illustrating a rechargeable lithium battery, according to one or more example embodiments.

### DETAILED DESCRIPTION

Hereinafter, example embodiments are described in detail. However, these embodiments are examples, the present invention is not limited thereto, and the present invention is defined by the scope of the claims.

As used herein, when a definition is not otherwise provided, it will be understood that when an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B."

As used herein, the term "combination thereof" may include a mixture, a laminate, a complex, a copolymer, an alloy, a blend, a reactant of constituents.

As used herein, when a definition is not otherwise provided, a particle diameter may be an average particle diameter. Such a particle diameter indicates an average particle diameter (D50) where a cumulative volume is about 50 volume% in a particle size distribution. The particle size (D50) may be measured by a method well known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50% standard of particle distribution in the measuring device.

In some example embodiments, an average particle diameter may be measured by various techniques, and for example, may be measured by a particle analyzer.

When the terms "about" or "substantially" are used in this specification in connection with a numerical value, it is intended that the associated numerical value includes a tolerance of ±10% around the stated numerical value. When ranges are specified, the range includes all values therebetween such as increments of 0.1%.

As used herein, soft carbon refers to graphitizable carbon materials and are readily graphitized by heat treatment at a high temperature, e.g., about 2800 °C, and hard carbon refers to non-graphitizable carbon materials and are slightly graphitized by heat treatment. The soft carbon and the hard carbon are well known in the related arts.

A negative electrode for a rechargeable lithium battery according to some example embodiments includes a current collector and a negative electrode active material layer on the current collector. In some example embodiments, the negative electrode active material layer is divided in the thickness direction and includes a first region in contact with the current collector and a second region on the first region that is not in contact with the current collector. The second region includes an expandable binder.

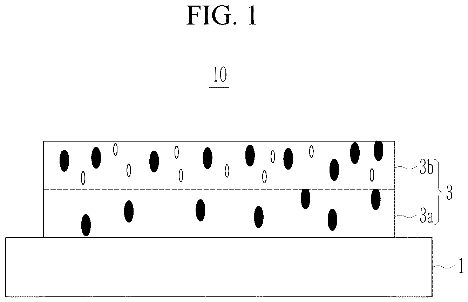

FIG. 1 schematically shows a negative electrode for a rechargeable lithium battery, and the negative electrode 10 includes a current collector 1 and a negative electrode active material layer 3 which may be divided into a first region 3a and a second region 3b.

In FIG. 1, the first region 3a and the second region 3b are depicted as two clearly distinct layers, but this is shown for the sake of convenience in explanation. The first region 3a and the second region 3b are distinguished only by the boundary surface and may not represent a clear two-layer structure. The first region 3a and the second region 3b are shown by distinguishing them with a dotted line. In FIG. 1, the black dots (●) represent a negative electrode active material and the white dots (○) represent an expandable binder. In FIG. 1, the expandable binder is illustrated as only being included in the second region.

For example, the first region 3a may be referred to as the lower part of the negative electrode active material layer, and the second region 3b may be referred to as the upper part of the negative electrode active material layer. The first region 3a and the second region 3b include the negative electrode active material, and the second region 3b further includes the expandable binder.

In some example embodiments, the second region 3b includes the expandable binder. The expandable binder includes a binder that may expand in volume upon contact with an electrolyte. The binder which may expand upon contact with the electrolyte may be a hydrogenated nitrile butadiene rubber, or a styrene-butadiene rubber. In one embodiment, the expandable binder may be the hydrogenated nitrile butadiene rubber.

The expandable binder may be positioned between the negative electrode active material particles of the second region 3b.

If a negative electrode such as negative electrode 10 is used to fabricate a battery, the electrolyte contacts with the expandable binder in the negative electrode 10 during injection of the electrolyte in the process of fabricating a rechargeable lithium battery, thereby causing the binder to expand. Such an expansion of the binder, for example, the expansion of the binder between the negative electrode active material particles, may help to form space or pores around the active material located near the binder. In some example embodiments, the expandable binder is located in the upper part of the negative electrode active material layer 3, i.e., the second region 3b, and thus space or pores are formed in the second region 3b of the negative electrode active material layer 3, thereby facilitating the insertion of lithium ions. This may lead to the improvement of cycle-life characteristics and high-rate capability.

For example, the expandable binder is included in the second region 3b to be located between the negative electrode active material particles during the negative electrode preparation, and if the battery is fabricated using the negative electrode, the volume of the expandable binder expands, causing the gaps between the negative electrode active material to widen, thereby forming spaces between the negative electrode active materials.

The effect of forming spaces or pores due to the expandable binder may be achieved by locating the expandable binder in the second region. If the expandable binder is included throughout the negative electrode active material layer 3, for example, even in the first region 3a, space or pores may be formed in the first region 3a, which may reduce the adhesion to the current collector, thereby causing the negative electrode active material layer 3 to separate during charging and discharging, and as a result, the cycle-life characteristics may deteriorate. If the expandable binder forms a separate layer from the negative electrode active material layer, for example, if a binder layer consisting of or including the expandable binder which does not include the negative electrode active material is formed, the expandable binder hinders or blocks the surface of the negative electrode active material layer 3, resulting in reduction or inhibition of the intercalation and deintercalation of lithium ions.

In some example embodiments, a thickness of the second region 3b may correspond to about 1% to about 50%, about 5% to about 50%, or about 10% to about 50% based on the total thickness, 100% of the negative electrode active material layer 3. If the thickness of the second region 3b is within any of the above ranges, the spaces or pores formed by the inclusion of the expansion binder may be sufficiently formed at a depth at which lithium ion intercalation mainly occurs.

In some example embodiments, the thickness of the second region 3b may be measured by a thickness measurement method through cutting using a Surface/Interfacial Characterization Analysis System (SAICAS). The expandable binder located only in the second region 3b of the negative electrode active material layer 3, for example, the upper part, may be confirmed by cross-sectional analysis using a scanning electron microscope to determine the binder distribution.

In some example embodiments, an amount of the expandable binder may be, based on 100 parts by weight of the negative electrode active material layer, about 1 part by weight to about 10 parts by weight, about 2 parts by weight to about 9 parts by weight, or about 2 parts by weight to about 8 parts by weight. If the amount of the expandable binder is within any of the above ranges, the spaces and pores of the negative electrode active material layer 3 by the expandable binder may be more sufficiently formed, thereby further improving cycle-life characteristics and high-rate capability.

In some example embodiments, the negative electrode active material may include a material that reversibly intercalates/deintercalates lithium ions such as, e.g., at least one of, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and the like.

The lithium metal alloy includes an alloy of lithium and a metal that includes at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material, or a Sn-based negative electrode active material. The Si-based negative electrode active material may include at least one of silicon, a silicon-carbon composite, SiOₓ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, and a combination thereof.

In some example embodiments, the negative electrode active material may be or include a carbon-based negative electrode active material, silicon-based negative electrode active material, or a combination thereof.

The carbon-based negative electrode active material may be or include the aforementioned crystalline carbon, and the silicon-based negative electrode active material may be or include a silicon-carbon composite.

In the silicon-carbon composite, the carbon may include at least one of amorphous carbon, and amorphous carbon and crystalline carbon.

The silicon-carbon composite may include silicon particles and amorphous carbon coated on the surface of the silicon particles. For example, the silicon-carbon composite may include silicon particles and an amorphous carbon coating layer on the surface of the silicon particles. In some example embodiments, the silicon-carbon composite may include secondary particles (core) where silicon primary particles are agglomerated, and an amorphous carbon coating layer (shell) on the surface of the secondary particles. The amorphous carbon may be located between the silicon primary particles, for example, to coat on the silicon primary particles. For example, the secondary particles may be distributed in an amorphous carbon matrix. The silicon primary particles may be nano silicon particles. The nano silicon particles may have a particle diameter of about 10 nm to about 900 nm, about 10 nm to about 800 nm, about 10 nm to about 500 nm, about 10 nm to about 300 nm or about 10 nm to about 200 nm. If the average particle diameter of the nano silicon particles is within any of the above ranges, the extreme volume expansion caused during charge and discharge may be reduced or suppressed, and a breakage of the conductive path due to crushing of particles may be reduced or prevented. In some example embodiments, the particle diameter of the silicon secondary particle may not be limited.

The amorphous carbon may include, e.g., at least one of a soft carbon, a hard carbon, a mesophase pitch carbonization product, calcined coke, and the like.

The thickness of the amorphous carbon coating layer may be appropriately adjusted to, for example, about 2 nm to about 800 nm, about 5 nm to about 600 nm, about 10 nm to about 400 nm, or about 20 nm to about 200 nm. In one or more example embodiments, the thickness of the amorphous carbon coating layer may be measured by a scanning electron microscope (SEM) image or a transmission electron microscope (TEM) image for the cross-section of the silicon-carbon composite, but it is limited thereto, and thus, may be measured by any technique that may measure the thickness of the amorphous carbon coating layer.

The particle diameter of the silicon-carbon composite may be appropriately adjusted, and may be, for example, about 30 µm or less, for some examples, about 1 µm to about 30 µm, about 2 µm to about 25 µm, about 3 µm to about 20 µm, or about 5 µm to about 15 µm.

In the silicon-carbon composite, based on 100 wt% of the silicon-carbon composite, an amount of the silicon particles may be about 30 wt% to about 70 wt%, or about 40 wt% to about 65 wt%. An amount of the amorphous carbon may be, based on the total 100 wt% of the silicon-carbon composite, about 30 wt% to about 70 wt%, or about 35 wt% to about 60 wt%. If the amounts of the silicon particles and the amorphous carbon satisfy any of the above ranges, higher capacity may be realized.

In the silicon-carbon composite, the carbon may include amorphous carbon and crystalline carbon. In some example embodiments, the silicon-carbon composite may include a core including silicon particles and crystalline carbon, and an amorphous carbon coating layer on a surface of the core. For example, the silicon-carbon composite may include a core including secondary particles where the silicon primary particles and crystalline carbon are agglomerated and an amorphous carbon coating layer on the core. The amorphous carbon is positioned between the silicon primary particles or between the crystalline carbons, thereby substantially filling the amorphous carbon between the silicon primary particles or the crystalline carbon.

The crystalline carbon may be at least one of unspecified-shaped, sheet shaped, flake shaped, spherical shaped, fiber shaped with natural graphite or artificial graphite, or a combination thereof.

An amount of the crystalline carbon may be, out of a total 100 wt% of a sum of the silicon particles, the amorphous carbon, and the crystalline carbon, about 1 wt% to about 20 wt%, and for example, about 3 wt% to about 17 wt%, or about 5 wt% to about 15 wt%. If the crystalline carbon is within any of the above ranges, the conductivity of the negative electrode active material may be improved.

In some example embodiments, the first region 3a and the second region 3b of the negative electrode active material layer 3, as illustrated in FIG. 1, may further include an adhesive binder. The adhesive binder is a binder generally included in the negative electrode active material layer 3 and it may be configured to sufficiently attach the negative electrode active material particles to each other and also to sufficiently attach the negative electrode active material to the current collector. The binder may include a non-aqueous binder, an aqueous binder, a dry binder, or a combination thereof.

The aqueous binder may be at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

The adhesive binder may include a cellulose-based compound and may include the aqueous binder together with the cellulose-based compound. The cellulose-based compound may be configured as a binder and may be configured as thickener for imparting viscosity. The cellulose-based compound may be used at a suitable amount with respect to the amount of the binder.

The cellulose-based compound includes one or more of carboxymethyl cellulose, hydroxypropyl methyl cellulose, methyl cellulose, and alkali metal salts thereof. The alkali metal may be, e.g., Na, K, or Li.

The dry binder may be a polymer material that is capable of being fibrous. For example, the dry binder may be at least one of polytetrafluoroethylene, polyvinylidene fluoride, a polyvinylidene fluoride-hexafluoropropylene copolymer, polyethylene oxide, and a combination thereof.

In some example embodiments, an amount of the negative electrode active material may be, based on 100 wt% of the negative electrode active material layer 3 illustrated in FIG. 1, about 97.5 wt% to about 99.4 wt%, about 97.5 wt% to about 99 wt%, or about 98 wt% to about 99 wt%.

An amount of the adhesive binder may be about 0.5 wt% to about 5 wt% based on 100 wt% of the negative electrode active material layer 3.

The negative electrode active material layer 3 according to one or more example embodiments may further include a conductive material.

The conductive material is included to provide electrode conductivity. Any electrically conductive material may be used as a conductive material unless the electrically conductive material causes a chemical change. Examples of the conductive material may be or include a carbon-based material such as at least one of natural graphite, artificial graphite, carbon black, acetylene black, ketjen black, a carbon fiber, a carbon nanofiber, carbon nanotubes, and the like; a metal-based material of a metal powder or a metal fiber including at least one of copper, nickel, aluminium, silver, and the like; a conductive polymer such as a polyphenylene derivative; or a mixture of the carbon-based material, the metal-based material, and the conductive polymer.

If the negative electrode active material layer further includes the aqueous binder and the conductive material, an amount of the expandable binder may be about 1 wt% to about 10 wt%, an amount of the negative electrode active material may be about 89 wt% to about 98 wt%, an amount of the adhesive binder may be about 0.5 wt% to about 5 wt%, and an amount of the conductive material may be about 0.5 wt% to about 5 wt%.

The current collector may include at least one of a copper foil, a nickel foil, a stainless steel foil, a titanium foil, a nickel foam, a copper foam, a polymer substrate coated with a conductive metal, and a combination thereof.

### A method of preparing a negative electrode

The negative electrode according to some example embodiments is prepared by coating a negative electrode active material layer composition including a negative electrode active material on a current collector, and drying the negative electrode active material layer composition to prepare a negative electrode coating layer; coating an expandable binder liquid that includes a binder which expands upon contact with an electrolyte, and a solvent, on the negative electrode coating layer; and drying the resulting product. The preparation is discussed in more detail below.

According to an example embodiment, a negative electrode active material layer composition is coated on a current collector and dried to prepare a negative electrode coating layer.

The negative electrode active material layer composition may include a negative electrode active material and an adhesive binder and may further include a conductive material. The negative electrode active material layer composition may include a solvent. The solvent may be water if the adhesive binder is the aqueous binder, and may be an organic solvent such as N-methyl pyrrolidone, or the like, but it is not limited thereto, if the adhesive binder is the non-aqueous binder.

Thereafter, an expandable binder liquid including a binder (expandable binder) which may expand upon contact with an electrolyte, and a solvent, are coated on the negative electrode coating layer. The solvent may be or include water or an organic solvent, and the organic solvent may be or include N-methyl pyrrolidone, ethanol, or a combination thereof. In some example embodiments, if the solvent of the negative electrode active material layer composition is different from the solvent of the expandable binder liquid, the adherence of the active material layer to the current collector may be improved.

According to an example embodiment, an amount of the solid in the expandable binder liquid may be, based on 100 wt% of the expandable binder liquid, about 2 wt% to about 20 wt%, about 3 wt% to about 18 wt%, or about 4 wt% to about 16 wt%. If the amount of the solid of the expandable binder liquid is within in any of the above ranges, the spaces and pores of the negative electrode active material layer 3 in FIG. 1 by the expandable binder may be more sufficiently formed, thereby improving cycle-life characteristics and high-rate capability.

The coating of the expandable binder liquid may be carried out by adjusting the distance applied per minute, for example, by adjusting the coating rate, and for example, at a rate of about 1 M/minute to about 20 M/minute, or about 5 M/minute to about 20 M/minute. The unit M/minute refers to meter/minute. A coating carried out at a rate that is in any of the above ranges may include the expandable binder in the second region, and, for example, corresponding to about 1 % to about 50%, about 5% to about 50%, or about 10% to about 50% based on 100% of the total thickness of the negative electrode active material layer.

The example process discussed above may allow the expandable binder liquid to permeate into the upper part of the negative electrode coating layer 3, and the drying may substantially remove the solvent, thereby forming a second region 3b in which the expandable binder remains in the upper part of the negative electrode coating layer 3. Because the expandable binder liquid is permeated into the negative electrode coating layer 3, the coating of the expandable binder liquid may result in significantly little increase in the overall thickness of the negative electrode active material layer 3. In the specification, significantly little increase in the thickness indicates that the increase in thickness due to the coating may be about 1 µm or less. For example, upon coating with the expandable binder liquid, the expandable binder liquid mostly permeates into the negative electrode coating layer 3, but due to the process, the expandable binder liquid may not substantially completely permeate into the negative electrode coating layer 3 and residual trace amounts of the expandable binder liquid may remain on the top of a portion of the negative electrode coating layer 3. Such residual trace amount may be a small amount and may remain at a thickness not exceeding about 1 µm. The existence of the residual trace amount of the expandable binder liquid in a portion of the negative electrode coating layer 3 may occur as an error during the process, and does not form a separate expandable binder layer. The coating may be carried out by, e.g., at least one of a coating coater, a bar coater, and a gravure coater.

Thereafter, the obtained product is dried. The drying may be carried out at about 50 °C to about 150 °C, or about 60 °C to about 120 °C. The drying may be carried out for about 1 minute to about 20 minutes, or from about 1 minute to about 10 minutes.

Thereafter, a pressurization may be carried out.

### Rechargeable lithium battery

Another example embodiment provides a rechargeable lithium battery including a negative electrode, a positive electrode, and an electrolyte.

### Positive electrode

The positive electrode may include a current collector and a positive electrode active material layer on the current collector. The positive electrode active material layer includes a positive electrode active material and may further include a binder and/or a conductive material.

For example, the positive electrode may further include an additive to be configured as a sacrificial positive electrode.

An amount of the positive electrode active material may be, e.g., about 90 wt% to about 99.5 wt% based on 100 wt% of the positive electrode active material layer, and amounts of the binder and the conductive material may be respectively, e.g., 0.5 wt% to 5 wt% based on 100 wt% of the positive electrode active material layer.

The positive electrode active material may include a compound (lithiated intercalation compound) that is configured to intercalate and deintercalated lithium. In some example embodiments, at least one of a composite oxide of lithium and a metal selected from at least one of cobalt, manganese, nickel, and combinations thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free nickel-manganese-based oxide, and a combination thereof.

For example, the following compounds represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0≤α≤2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1 ); LiₐNiG_{b}O₂ (0.90≤a≤1.8, 0.001≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂(PO₄)₃ (0≤f≤2); LiₐFePO₄ (0.90≤a≤1.8).

In the above chemical formulas, A is or includes Ni, Co, Mn, or a combination thereof; X is or includes Al, Ni, Co, Mn, Cr, Fe, Mg, Sr, V, a rare earth element or a combination thereof; D is O, F, S, P, or a combination thereof; G is or includes Al, Cr, Mn, Fe, Mg, La, Ce, Sr, V, or a combination thereof; and L¹ is or includes Mn, Al, or a combination thereof.

For example, the positive electrode active material may be or include a high nickel-based positive electrode active material having a nickel amount that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with a current collector. Examples of the binder may be or include at least one of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and the like, but are not limited thereto.

The conductive material is included to provide electrode conductivity, and any electrically conductive material may be used as a conductive material unless the electrically conductive material causes a chemical change. Examples of the conductive material may include a carbon-based material such as at least one of natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminium, silver, or the like; a conductive polymer such as a polyphenylene derivative; or a mixture thereof.

The current collector may include Al, but is not limited thereto.

### Electrolyte

The electrolyte may include a non-aqueous organic solvent and a lithium salt.

The non-aqueous organic solvent may be configured as a medium for transmitting ions taking part in the electrochemical reaction of a battery.

The non-aqueous organic solvent may include at least one of a carbonate-based, ester-based, ether-based, ketone-based, alcohol-based, and an aprotic solvent.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, or the like. The alcohol-based solvent may include at least one of ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be used alone or in a mixture of two or more.

If the carbonate-based solvent is used, a cyclic carbonate and a linear carbonate may be used together therewith, and the cyclic carbonate and the linear carbonate may be mixed at a volume ratio of about 1:1 to about 1:9.

The lithium salt dissolved in an organic solvent supplies a battery with lithium ions, and improves transportation of the lithium ions between positive and negative electrodes, thereby facilitating the operation of the rechargeable lithium battery. Examples of the lithium salt include a supporting electrolyte salt that is at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of about 1 to about 20, lithium trifluoromethane sulfonate, lithium tetrafluoroethanesulfonate, lithium difluorobis(oxalato)phosphate (LiDFOP), and lithium bis(oxalato) borate (LiBOB).

### Separator

A separator may be disposed between the positive electrode and the negative electrode depending on a type of a rechargeable lithium battery. The separator may use or include at least one of polyethylene, polypropylene, polyvinylidene fluoride, and multi-layers thereof having two or more layers, and may be or include a mixed multilayer such as, e.g., at least one of a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one or both surfaces of the porous substrate.

The porous substrate may be or include a polymer film formed of at least one of polyolefin such as, e.g., polyethylene and polypropylene, polyester such as, e.g., polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acryl-based polymer.

The inorganic material may be or include an inorganic particle that is at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and an inorganic material may be mixed in one coating layer, or a coating layer including an inorganic material may be stacked.

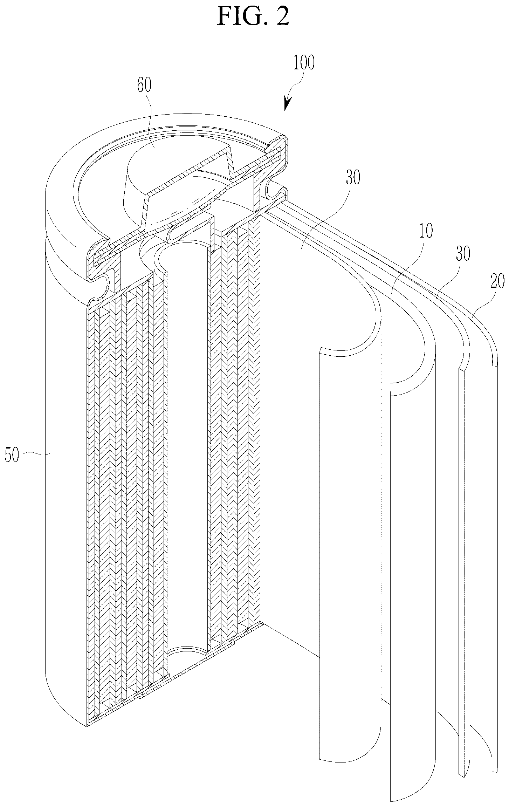

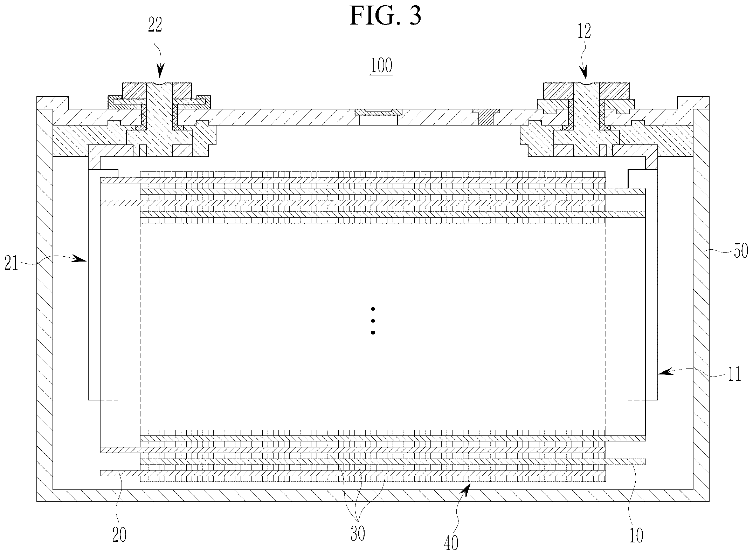

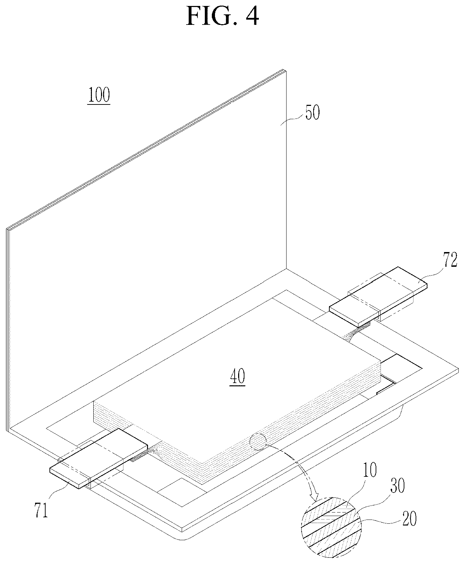

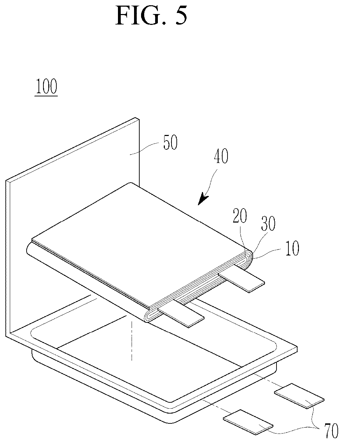

The rechargeable lithium battery may be classified into cylindrical, prismatic, pouch, or coin-type batteries, and the like depending on their shape. FIG. 2 to FIG. 5 are schematic views illustrating a rechargeable lithium battery according to an example embodiment, and FIG. 2 illustrates a cylindrical battery, FIG. 3 illustrates a prismatic battery, and FIG. 4 and FIG. 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 2. In FIG. 3, the rechargeable lithium battery 100 may include a positive electrode lead tab 11 and a positive terminal 12, a negative electrode lead tab 21, and a negative terminal 22. As shown in FIG. 5, the rechargeable lithium battery 100 may include an electrode tab 70, which may be serving as an electrical path for inducing the current formed in the electrode assembly 40 to the outside, for example, a positive electrode tab 71 and a negative electrode tab 72 which are illustrated in FIG. 4.

The rechargeable lithium battery according to an example embodiment may be applied to, e.g., automobiles, mobile phones, and/or various types of electric devices, as non-limiting examples.

The following Examples and Comparative Examples are provided in order to highlight characteristics of one or more example embodiments, but it will be understood that the Examples and Comparative Examples are not to be construed as limiting the scope of the example embodiments. Further, it will be understood that the example embodiments are not limited to the particular details described in the Examples and Comparative Examples.

### Example 1

96 wt% of artificial graphite, 2 wt% of a styrene-butadiene rubber, and 2 wt% of carboxymethyl cellulose were mixed in a water solvent to prepare an active material slurry.

A hydrogenated nitrile butadiene rubber was added to an N-methyl pyrrolidone solvent to prepare an expandable binder liquid with a solid amount of 8 wt%.

The active material slurry was coated on a Cu foil current collector and dried to prepare a negative electrode coating layer.

The expandable binder liquid was coated on the negative electrode coating layer using a bar coater at a rate of 12 M/minute, dried in a 120 °C oven for 5 minutes, and then pressurized to prepare a negative electrode including a negative electrode active material layer including the current collector and a negative electrode active material layer on the current collector.

The negative electrode active material layer included a first region in contact with the current collector and a second region on the first region and including the expandable binder.

In the prepared negative electrode active material layer, the expandable binder was presented in the second region corresponding to 10% based on 100% of the thickness of the negative electrode active material layer which was confirmed by measuring the thickness and scanning electron microscope cross-section. The thickness of the second region was obtained by measuring a length from the outermost surface of the negative electrode active material layer in the direction of the current collector and it was confirmed through a scanning electron microscope cross-section that the expandable binder was uniformly present in the second region. An amount of the expandable binder was 3 parts by weight based on the total 100 parts by weight of the negative electrode active material layer.

The negative electrode, a LiNi_{0.8}Co_{0.1}Al_{0.1}O₂ positive electrode, and an electrolyte were used to fabricate a pouch cell. The electrolyte used was prepared by dissolving 1 M LiPF₆ in a mixed solvent of ethylene carbonate and dimethyl carbonate (3:7 volume ratio).

### Example 2

A negative electrode was prepared by the same procedure in Example 1, with a difference that the expandable binder liquid was coated on the negative electrode coating layer using a bar coater at a rate of 6 M/minute and the expandable binder was presented in the second region corresponding to 30% based on 100% of the thickness of the negative electrode active material layer. An amount of the expandable binder was 8 parts by weight based on the total 100 parts by weight of the negative electrode active material layer.

A pouch cell was fabricated by the same procedure as in Example 1, with a difference regarding using the negative electrode.

### Example 3

A negative electrode was prepared by the same procedure as in Example 1, with a difference that the expandable binder liquid with the solid amount of 16 wt% was used, the expandable binder was presented in the second region corresponding to 10% based on 100% of the thickness of the negative electrode active material layer, and an amount of the expandable binder was 6 parts by weight based on the total 100 parts by weight of the negative electrode active material layer.

A single layer pouch cell was fabricated by the same procedure as in Example 1, with a difference regarding using the negative electrode.

### Comparative Example 1

96 wt% of artificial graphite, 2 wt% of a styrene-butadiene rubber, and 2 wt% of carboxymethyl cellulose were mixed in a water solvent to prepare an active material slurry.

The negative electrode active material layer slurry was coated on a Cu foil current collector, dried, and pressurized to prepare a negative electrode including the current collector and a negative electrode active material layer on the current collector.

A single layer pouch cell was fabricated by the same procedure as in Example 1, with a difference regarding using the negative electrode.

### Comparative Example 2

92 wt% of artificial graphite, 2 wt% of hydrogenated nitrile butadiene rubber, 2 wt% of a styrene-butadiene rubber, and 2 wt% of carboxymethyl cellulose were mixed in a water solvent to prepare an active material slurry.

The negative electrode active material layer slurry was coated on a Cu foil current collector, dried, and pressurized to prepare a negative electrode including the current collector and a negative electrode active material layer on the current collector.

A single layer pouch cell was fabricated by the same procedure as in Example 1, with a difference regarding using the negative electrode.

### Comparative Example 3

92 wt% of artificial graphite, 2 wt% of hydrogenated nitrile butadiene rubber, 2 wt% of a styrene-butadiene rubber, and 2 wt% of carboxymethyl cellulose were mixed in a water solvent to prepare a first layer slurry.

96 wt% of artificial graphite, 2 wt% of a styrene-butadiene rubber, and 2 wt% of carboxymethyl cellulose were mixed in a water solvent to prepare a second layer slurry.

The first layer slurry was coated on a Cu foil current collector and dried to prepare a first layer and then the second layer slurry was coated on the first layer, dried, and then pressurized to prepare a negative electrode in which the current collector, the first layer (thickness: 30 µm), and the second layer (thickness: 30 µm) were sequentially formed.

A single layer pouch cell was fabricated by the same procedure as in Example 1, with a difference regarding using the negative electrode.

### Experimental Example 1) Evaluation of initial capacity

The single layer pouch cells according to Examples 1 to 3 and Comparative Examples 1 to 3 were charged and discharged once at 0.1 C to measure a discharge capacity.

Considering the discharge capacity of Comparative Example 1 as 100%, a ratio of the measured discharge capacity was calculated. The results are shown in Table 1.

### Experimental Example 2) Evaluation of capacity retention

The single layer pouch cells according to Examples 1 to 3 and Comparative Examples 1 to 3 were charged at 0.33 C and discharged at 1 C for 100 cycles. A ratio of discharge capacity at 100^{th} cycle relative to discharge capacity at the first cycle was calculated. The results are shown in Table 1, as capacity retention.

### Experimental Example 3) Evaluation of high-rate characteristic

The single layer pouch cells according to Examples 1 to 3 and Comparative Examples 1 to 3 were charged and discharged once at 0.2 C and charged and discharged once at 2 C to measure 0.2 C discharge capacity and 2 C discharge capacity. A ratio of 2 C discharge capacity relative to 0.2 C discharge capacity was calculated. The results are shown in Table 1.

A percentage (%) of the second region relative to 100 % of the thickness of the negative electrode active material layer is shown in Table 1.

**Table 1**

| | Second region thickness% | Capacity retention (%) | Ratio of initial capacity (%) | High-rate capability (%) |
|---|---|---|---|---|
| Example 1 | 10 | 83.6 | 102.8 | 94.4 |
| Example 2 | 30 | 82.5 | 103.7 | 94.2 |
| Example 3 | 10 | 80.5 | 100.7 | 93.8 |
| Comparative Example 1 | X | 74.9 | 100.0 | 93.5 |
| Comparative Example 2 | X | 72.6 | 101.3 | 93.7 |
| Comparative Example 3 | X | 76.4 | 100.7 | 93.5 |

As shown in Table 1, it can be seen that Examples 1 to 3 exhibited superior capacity retention, initial capacity, and high-rate capability compared to Comparative Example 1 which does not include the hydrogenated nitrile butadiene rubber.

Comparative Example 2 in which the hydrogenated nitrile butadiene rubber was substantially distributed in the negative electrode active material layer, exhibited deteriorated capacity retention, initial capacity, and high-rate capability than Comparative Example 1.

Comparative Example 3 in which the hydrogenated nitrile butadiene rubber was included in the first layer in contact with the current collector, also exhibited deteriorated capacity retention, initial capacity, and high-rate capability than Comparative Example 1.

While this invention has been described in connection with what is presently considered to be practical example embodiments, it is to be understood that the invention is not limited to the disclosed example embodiments. On the contrary, it is intended to cover various modifications and equivalent arrangements included within the scope of the appended claims.

## Claims

1. A negative electrode for a rechargeable lithium battery, the negative electrode comprising:
a current collector; and
a negative electrode active material layer on the current collector,
wherein:
the negative electrode active material layer comprises a first region in contact with the current collector, and a second region on the first region,
the first region comprises a negative electrode active material, and
the second region comprises an expandable binder and a negative electrode active material.

2. The negative electrode for the rechargeable lithium battery as claimed in claim 1, wherein:
(i) the second region has a thickness corresponding to about 1% to about 50% of a total thickness of the negative electrode active material layer; or
(ii) the second region has a thickness corresponding to about 5% to about 50% of a total thickness of the negative electrode active material layer.

3. The negative electrode for the rechargeable lithium battery as claimed in claim 1 or claim 2, wherein the expandable binder comprises a hydrogenated nitrile butadiene rubber or a styrene-butadiene rubber.

4. The negative electrode for the rechargeable lithium battery as claimed in any one of claims 1 to 3, wherein an amount of the expandable binder is about 1 part by weight to about 10 parts by weight based on 100 parts by weight of the negative electrode active material layer.

5. The negative electrode for the rechargeable lithium battery as claimed in any one of claims 1 to 4, wherein the negative electrode active material comprises at least one of a carbon-based negative electrode active material, a silicon-based negative electrode active material, and a combination thereof, optionally wherein the silicon-based negative electrode active material comprises a silicon-carbon composite.

6. The negative electrode for the rechargeable lithium battery as claimed in any one of claims 1 to 5, wherein at least one of the first region and the second region further comprises an adhesive binder.

7. The negative electrode for the rechargeable lithium battery as claimed in claim 6, wherein the adhesive binder comprises at least one of a non-aqueous binder, an aqueous binder, dry binder, and a combination thereof.

8. The negative electrode for the rechargeable lithium battery as claimed in claim 6 or claim 7, wherein the adhesive binder comprises at least one of an aqueous binder and a cellulose-based compound.

9. A method of preparing a negative electrode for a rechargeable lithium battery, the method comprising:
coating a negative electrode active material layer composition that comprises a negative electrode active material on a current collector, and drying the negative electrode active material layer composition to prepare a negative electrode coating layer;
coating an expandable binder liquid that comprises an expandable binder and a solvent on the negative electrode coating layer to impregnate the binder to the negative electrode coating layer; and
drying a resulting product of an impregnation of the binder to the negative electrode coating layer.

10. The method of preparing the negative electrode for the rechargeable lithium battery as claimed in claim 9, wherein the solvent comprises at least one of water and an organic solvent.

11. The method of preparing the negative electrode for the rechargeable lithium battery as claimed in claim 9 or claim 10, wherein the organic solvent comprises at least one of N-methyl pyrrolidone, ethanol, and a combination thereof.

12. The method of preparing the negative electrode for the rechargeable lithium battery as claimed in any one of claims 9 to 11, wherein the expandable binder comprises a hydrogenated nitrile butadiene rubber.

13. The method of preparing the negative electrode for the rechargeable lithium battery as claimed in any one of claims 9 to 12, wherein a solid amount in the expandable binder liquid is about 2 wt% to about 20 wt% based on 100 wt% of the expandable binder liquid.

14. The method of preparing the negative electrode for the rechargeable lithium battery as claimed in any one of claims 9 to 13, wherein the coating of the expandable binder liquid is carried out at a coating speed in a range of about 1 M/minute to 20 M/minute.

15. A rechargeable lithium battery, comprising:
the negative electrode of any one of claims 1 to 8;
a positive electrode; and
an electrolyte.
